# EUROPÄISCHE PATENTSCHRIFT

(11) **EP 2 847 046 B1**
(45) Veröffentlichungstag und Bekanntmachung des Hinweises auf die Patenterteilung: **16.09.2020**
(21) Anmeldenummer: 13727514.5
(22) Anmeldetag: 07.05.2013
(51) Int. Cl.: B60R 21/237

(54) **GASSACKPAKET FÜR EIN INSASSENRÜCKHALTESYSTEM EINES KRAFTFAHRZEUGS, INSASSENRÜCKHALTESYSTEM UND VERFAHREN ZUR HERSTELLUNG EINES DERARTIGEN GASSACKPAKETS**
AIIRBAGPACKAGE FOR A VEHICLE SAFETY SYSTEM, SAFETY SYTEM AND METHOD OF HIS FABRICATION
PAQUET DE COUSSIN GONFLABLE POUR UN SYSTEM DE RETENUE ET SON PROCEDE DE FABRICATION

(30) Priorität: 07.05.2012 DE 102012008809
(43) Veröffentlichungstag der Anmeldung: 18.03.2015
(73) Patentinhaber: ZF Automotive Safety Germany GmbH, 63743 Aschaffenburg (DE)
(72) Erfinder: KUNKEL, Michael, 63808 Haibach (DE); FREUDENBERGER, Klaus, 63743 Aschaffenburg (DE); RUMPF, Dieter, 63322 Rödermark (DE); SAPOUNTZIS, Stefan, 63906 Erlenbach a. Main (DE); HEPP, Stefan, 63864 Glattbach (DE); BACHMANN, Stefan, 63872 Heimbuchenthal (DE); HEROLD, Timm, 63743 Aschaffenburg (DE); HIRZMANN, Guido, 63877 Sailauf (DE)
(74) Vertreter: ZF Patentabteilung - DIPS
(86) Internationale Anmeldenummer: PCT/EP2013/001343
(87) Internationale Veröffentlichungsnummer: WO 2013/167261

(56) Entgegenhaltungen:
- EP-A1- 2 594 441
- EP-A2- 1 031 473
- EP-A2- 1 127 752
- WO-A1-2011/075050
- US-A- 5 022 676

## Beschreibung

Die Erfindung betrifft ein Verfahren zur Herstellung eines Gassackpakets gemäß dem Oberbegriff des Patentanspruchs 1.

Im Allgemeinen sind Gassackpakete aus einem gefalteten Gassack gebildet, der meist aus einem Textilgewebe hergestellt ist. Zwischen den Falten des Gassacks sowie den einzelnen Gewebefäden, also dem Material des Gassacks, sind im Gassackpaket Freiräume gebildet. Konkret besteht das Gassackpaket also aus dem gefalteten Gassack und einem gewissen Luftvolumen, das zwischen dem Material des Gassacks eingeschlossen ist.

Bei der Herstellung eines Gassacks ist es bekannt, den Gassack zunächst zu falten und anschließend in eine Abdeckkappe zu übergeben. In der Abdeckkappe wird der Gassack fixiert, so dass er anschließend beispielsweise in ein Lenkrad oder Armaturenbrett eingesetzt werden kann. Die äußere Form des Gassackpakets ist allerdings nicht stabil, sondern fällt selbständig auseinander, wenn sie nicht in der Abdeckkappe fixiert ist. Diese Tendenz, sich wieder zu entfalten, weist das Gassackpaket auch nach dem Einsetzen in die Abdeckkappe auf. Folglich drückt das Gassackpaket während der gesamten Lebensdauer beständig gegen die Abdeckkappe. Diese Dauerbelastung zeichnet sich im Laufe der Zeit an der Aufreißkante der Abdeckkappe ab und beeinträchtigt das optische Erscheinungsbild der Abdeckkappe.

Auch während der Herstellung führt die Instabilität des Gassackpakets zu Problemen. Bei dem Herstellungsverfahren gemäß EP 1 127 752 A2 wird der Gassack mit Hilfe einer den Gassack umschließenden Folie gefaltet. Anschließend muss das Gassackpaket aus der Folie entnommen und in die Abdeckkappe übergeben werden. Zwar wird das Gassackpaket unter Temperatureinfluss gepresst, so dass die Faltung für einen begrenzten Zeitraum erhalten bleibt. Dennoch springt das Gassackpaket etwas auf, so dass das tatsächliche Paketvolumen aufgrund der darin eingeschlossenen Luft erheblich größer ist als das Gassackvolumen, das sich als theoretisches Gassackvolumen aus der Dichte des Materials errechnen lässt, welches für die Herstellung des Gassacks verwendet wird. Auch ist die Formgebung bei dem Herstellungsverfahren gemäß EP 1 127 752 A2 nicht dauerhaft.

Die US 5,022,676 zeigt ein Verfahren zur Herstellung eines Gassackpakets, bei dem der Gassack ebenfalls zunächst erwärmt und gefaltet sowie anschließend im erhitzten Zustand zusammengepresst wird. Auf diese Weise wird eine relativ dauerhafte Formstabilität des Gassackpakets erreicht, wobei auf den damit erreichbaren Kompressionsgrad des Gassackpakets nicht näher eingegangen wird.

Die Aufgabe der Erfindung besteht darin, ein Verfahren zur Herstellung eines kompakten Gassackpakets anzugeben, bei dem das Gassackpacket seine Form dauerhaft beibehält.

Erfindungsgemäß wird diese Aufgabe im Hinblick auf das Verfahren durch den Gegenstand des Anspruchs 1 gelöst.

Die Erfindung betrifft ein Verfahren zur Herstellung eines Gassackpakets oder Insassenrückhaltesystems, insbesondere eines oben beschriebenen Gassackpakets oder Insassenrückhaltesystems, bei dem ein gefalteter Gassack in ein Formelement eingelegt und anschließend gepresst sowie gleichzeitig erwärmt wird, wobei das Pressen und Erwärmen des Gassacks zumindest solange durchgeführt wird, bis das Gassackpaket dauerhaft formstabil ist, und wobei nach dem Schritt des Erwärmens ein Schritt des Abkühlens des Gassacks auf eine Verfahrensendtemperatur um mindestens 100°C vorgesehen ist.

Durch das gleichzeitige Pressen und Erwärmen wird ein Gassackpaket hergestellt, das im Wesentlichen ohne eine Volumenänderung in ein Gehäuse z.B. in eine Abdeckkappe übergeben werden kann. Das erleichtert die Herstellung des Gassackpakets erheblich und ermöglicht gleichzeitig die Produktion von Gassackpaketen mit möglichst kleinen Paketvolumina.

Gemäß einer bevorzugten Ausgestaltung des erfindungsgemäßen Verfahrens weist das Formelement eine Innenkontur auf, die der Innenkontur eines Aufnahmeraums für das Gassackpaket im Insassenrückhaltesystem entspricht. Bei dem Verfahren wird in vorteilhafter Weise das Gassackpaket bereits in der Form gepresst und erwärmt, die es auch später im Insassenrückhaltesystem einnehmen soll. Da das Gassackpaket dauerhaft formstabil ist, wird vermieden, dass das Gassackpaket eine Kraft auf die Umhüllung des Aufnahmeraums, insbesondere eine Abdeckkappe, ausübt, die das optische Erscheinungsbild beeinträchtigen könnte.

Das Pressen und Erwärmen des Gassacks wird vorzugsweise über einen Zeitraum von wenigstens einer Stunde, vorzugsweise etwa zwei Stunden, durchgeführt. Es hat sich gezeigt, dass dieser Zeitraum ausreicht, um ein dauerhaft formstabiles Gassackpaket herzustellen.

Vorzugsweise wird der Gassack auf eine Temperatur von wenigstens 125° C, weiter vorzugweise wenigstens 140°, besonders vorzugsweise etwa 150°C, erwärmt. In Kombination mit dem gleichzeitigen Pressvorgang wird damit erreicht, dass im Material des Gassacks durch die Faltung eingebrachte innere Spannungen abgebaut werden. Somit stellt sich ein Gleichgewichtszustand ein, was dazu führt, dass das Gassackpaket die gewünschte Form beibehält. Insbesondere bleibt das Paketvolumen im Wesentlichen unverändert.

Gemäß einem weiteren Aspekt des erfindungsgemäßen Verfahrens erfolgt das Erwärmen des Gassacks über einen Zeitraum von wenigstens einer Stunde, vorzugsweise etwa 2 Stunden.

Gemäß einem weiteren Aspekt des erfindungsgemäßen Verfahrens erfolgt das Pressen bei einem Druck von wenigstens 50N/cm², vorzugsweise bei einem Druck von wenigstens 80N/cm², weiter vorzugsweise bei einem Druck von wenigstens 110N/cm², und insbesondere bei einem Druck von größer gleich 130N/cm².

Es ist bevorzugt, dass nach dem Schritt des Erwärmens der Schritt des raschen Abkühlens des Gassackes auf eine Verfahrensendtemperatur um mindestens 110°C, vorzugsweise um mindestens 120°C, insbesondere um mindestens 125°C vorgesehen ist.

Weiter ist bevorzugt, dass die Verfahrensendtemperatur über der Raumtemperatur liegt und/oder mehr als 25°C, vorzugsweise mehr als 30°C, weiter vorzugsweise mehr als 35°C insbesondere ca. 40°C beträgt.

Gemäß einer weiter bevorzugten Ausgestaltung des erfindungsgemäßen Verfahrens ist vorgesehen, dass der Schritt des raschen Abkühlens des Gassackes auf die Verfahrensendtemperatur in kurzer Zeit von weniger als 20 Minuten, vorzugsweise innerhalb von 15 Minuten erfolgt.

Ebenso ist bevorzugt, dass das Pressen des Gassackes während des Schrittes des Erwärmens und vorzugsweise auch während des Schrittes des raschen Abkühlens des Gassackes auf die Verfahrensendtemperatur erfolgt.

Das Pressen des Gassacks kann mit einem Presselement durchgeführt werden, das auf einer auf den Gassack auflegbaren Kontaktfläche eine Erhebung aufweist. Die Erhebung drückt sich beim Pressen des Gassacks in eine Außenfläche des Gassackpakets ein, so dass im Gassackpaket eine Vertiefung gebildet wird. Diese Vertiefung kann beispielsweise genutzt werden, um den Raum für ein Emblem in einer Abdeckkappe freizuhalten.

Die Erfindung wird im Folgenden anhand von Ausführungsbeispielen unter Bezugnahme auf die beigefügten, schematischen Zeichnungen näher erläutert. Darin zeigen
- Fig. 1:: ein Formelement für die erfindungsgemäße Herstellung eines Gassackpakets nach einem bevorzugten Ausführungsbeispiel;
- Fig. 2:: das Formelement gemäß Fig. 1, wobei ein Presselement zum Pressen des gefalteten Gassacks eingesetzt ist;
- Fig. 3:: das Formelement gemäß Fig. 1 mit abgenommenem Press-element nach dem Pressen des Gassacks;
- Fig. 4:: ein Gassackpaket nach dem Pressen gemäß den in den Fig. 1-3 gezeigten Schritten im formstabilen Zustand;
- Fig. 5:: eine tabellarische Übersicht von Kompressionsverhältnissen Vᵣₑₐₗ/V_{Sack} bei unterschiedlichen Gassackmaterialien;
- Fig. 6: ein Diagramm, das das Relaxationsverhalten eines gemäß dem erfindungsgemäßen Verfahren hergestellten Gassackpakets über Druck und Zeit darstellt; und
- Fig. 7a - d: die vier Phasen der Gewebemoleküle eines nach dem erfindungsgemäßen Verfahren in dauerhaft stabile Form gebrachten Gassackpaketes.

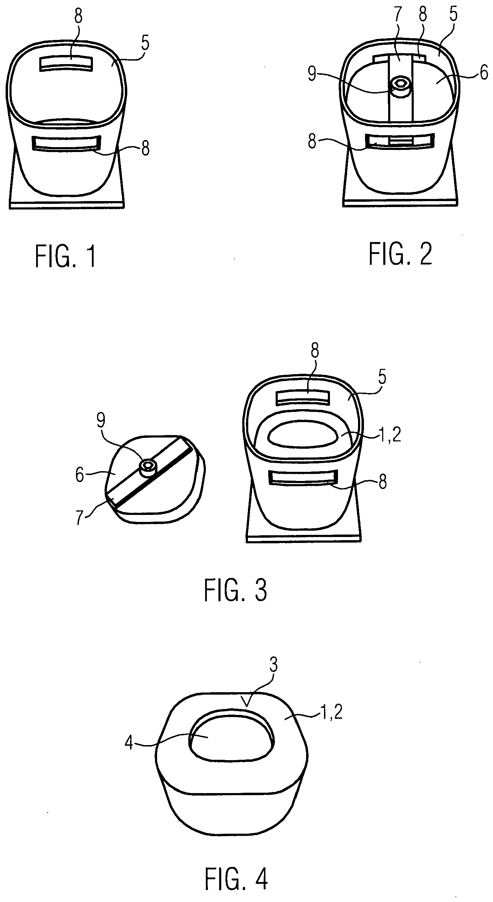

In Fig. 1 ist ein nach oben geöffneter Container gezeigt, der das Formelement 5 für die Herstellung des erfindungsgemäßen Gassacks 2 bildet. Das Formelement 5 weist eine Innenkontur bzw. eine Innengeometrie auf, die der Innenkontur bzw. der Innengeometrie eines Aufnahmeraums entspricht, in welchen das Gassackpaket 1 im Insassenrückhaltesystem angeordnet ist. Der Aufnahmeraum ist üblicherweise in einer Abdeckkappe eines Airbagmoduls angeordnet. Gut zu erkennen sind zwei gegenüberliegende, schlitzartige Öffnungen 8 in den Seitenwänden des Formelements 5. Diese dienen zum Fixieren eines Presselements 6, das bei der Herstellung des Gassackpakets 1 zum Einsatz kommt.

Im Folgenden werden die einzelnen Schritte des Herstellungsverfahrens näher erläutert:
Zunächst wird der Gassack 2 gefaltet und im gefalteten Zustand in das Formelement 5 übergeben. Anschließend wird das Presselement 6, das vorzugsweise eine der Innenkontur des Formelements 5 entsprechende Außenkontur aufweist, in das Formelement 5 eingesetzt (Fig. 2). Das Presselement 6 weist einen Sperrbalken 7 auf, der in die schlitzartigen Öffnungen 8 des Formelements 5 eingreift. Der Sperrbalken 7 ist mit einer Schraube 9 am Presselement 6 fixiert. Das Formelement 5 und das Presselement 6 wirken derart zusammen, dass auf den gefalteten Gassack 2 eine Presskraft von etwa 10900 N aufgebracht wird.

Gleichzeitig mit dem Pressen des Gassacks 2 wird das im Formelement 5 angeordnete Gassackpaket 1 mit Wärme beaufschlagt. Das Gassackpaket 1 dabei auf eine Temperatur von über 130°C, vorzugsweise auf über 140°C erwärmt. Insbesondere ist vorgesehen, dass das Gassackpaket 1 dabei auf eine Temperatur von 150° C erwärmt wird. Das Pressen und Erwärmen des Gassackpakets 1 erfolgt über einen Zeitraum etwa zwei Stunden, so dass sich die inneren Spannungen im Gassackgewebe bzw. im Material des Gassacks 2 abbauen. Somit behält das Gassackpaket 1 seine Form bei, auch wenn es aus dem Formelement 5 herausgelöst ist.

Fig. 3 zeigt das im Formelement 5 angeordnete Gassackpaket 1 nach dem Vorgang des Pressens und Erwärmens.

Hieran schließt sich noch ein Schritt des raschen Abkühlens des Gassackpacketes um mindestens 80°C, vorzugsweises mindestens 90°C, weiter vorzugsweise mindestens 100°C, insbesondere mindestens 110°C, wobei gemäß einer besonderen Ausführungsform auch ein Abkühlen um mindestens 120°C oder mindestens 125°C möglich ist.

Gemäß einer speziell bevorzugten Ausführung erfolgt das Abkühlen von einer Haltetemperatur von 150°C auf eine Verfahrensendtemperatur von 40°C.

Das Abkühlen des gepreßten Gassackpaketes von der Erwärmungstemperatur auf die Verfahrensendtemperatur erfolgt erfindungsgemäß in kurzer Zeit von weniger als 25 Minuten, insbesondere von weniger als 20 Minuten, vorzugsweise innerhalb von 15 Minuten.

Das gepresste und abgekühlte Gassackpaket 1 kann nun aus dem Formelement 5 entnommen werden und weist eine dauerhaft stabile Form auf (Fig. 4).

Bei dem hier gezeigten Ausführungsbeispiel ist ferner vorgesehen, dass das Presselement 6 eine Erhebung aufweist, die beim Pressen des Gassackpakets 1 eine Vertiefung 4 auf einer Außenfläche 3 des Gassackpakets hinterlässt. Die Vertiefung 4 dient beispielsweise dazu, einen Emblemraum eines Fahrzeugemblems in einer Abdeckkappe freizuhalten.

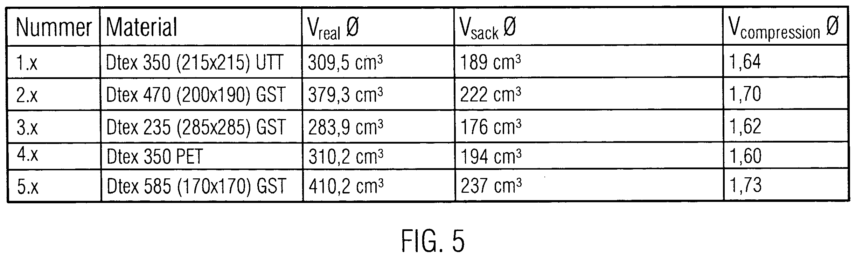

Die Besonderheit des auf diese Weise hergestellten Gassackpakets zeigt sich im Kompressionsfaktor, der deutlich niedriger ist als bei bekannten Gassackpaketen. Der Kompressionsfaktor entspricht dem Verhältnis zwischen Paketvolumen Vᵣₑₐₗ und Gassackvolumen V_{sack} gemäß dem Quotienten Vᵣₑₐₗ/V_{sack}. Tabelle in Fig. 5 zeigt eine Übersicht über die erreichbaren Kompressionsfaktoren V_{compression} bei unterschiedlichen Gassackmaterialien.

Der Kompressionsfaktor V_{compression} berechnet sich wie folgt:
Das Paketvolumen Vᵣₑₐₗ des Gassackpakets setzt sich einerseits aus dem Volumen des Gassackmaterials (Gassackvolumen V_{Sack}) und andererseits aus dem Luftvolumen zusammen, das zwischen den Falten bzw. zwischen dem Gewebe des Gassackmaterials eingeschlossen ist. Das Luftvolumen wird als Freiraumvolumen V_{frei} bezeichnet.

Das Gassackvolumen V_{Sack} kann ohne Weiteres aus der bekannten Dichte und dem bekannten Flächengewicht der verwendeten Gassackmaterialien errechnet werden. Das Gassackvolumen V_{Sack} entspricht somit im Wesentlichen einem theoretischen Gewebevolumen, das das Gassackpaket 1 aufweisen würde, wenn es vollständig frei von Lufteinschlüssen wäre. Das Gassackvolumen ist in der Tabelle gemäß Fig. 5 als "calculated theoretical fabric volume" bezeichet.

Das tatsächliche Paketvolumen Vᵣₑₐₗ liegt üblicherweise deutlich über dem Wert für das theoretisch errechnete Gassackvolumen V_{Sack}. Das Paketvolumen Vᵣₑₐₗ ist in der Tabelle gemäß Fig. 5 als "package volume" bezeichnet.

Für die Beurteilung der Packungsdichte ist das Verhältnis zwischen dem Paketvolumen Vᵣₑₐₗ und dem Gassackvolumen V_{sack} relevant. Dieses Verhältnis (der Kompressionsfaktor) gibt im Wesentlichen an, wie viel Lufteinschlüsse noch im Gassackpaket 1 verbleiben. Ein möglichst kleiner Wert wird angestrebt, um das Gassackpaket 1 für möglichst kleine Einbauräume anzupassen.

Mit dem erfindungsgemäßen Verfahren sind verhältnismäßig große Kompressionsfaktoren realisierbar, wie die Tabelle in Fig. 5 anschaulich zeigt. Konkret sind mit dem erfindungsgemäßen Verfahren reale Paketvolumina Vᵣₑₐₗ erreichbar, die um maximal das 1,8-fache größer als ein theoretisches Gassackvolumen V_{Sack} sind, das aus der Dichte des verwendeten Gassackgewebes bzw. Gassackmaterials errechnet wird. Dabei wird angenommen, dass das verwendete Gassackmaterial nicht als Gewebe mit Lufteinschlüssen bzw. Freiräumen vorliegt, sondern als kompakter Materialblock aus dem Gewebematerial des Gassacks 2. Der Materialblock ist also Lufteinschlussfrei.

Die Erfindung ermöglicht daneben auch, dass das Gassackpaket selbstständig dauerhaft formstabil ist. Dies wird folgendermaßen erreicht: Durch mechanische Zwangsbedingungen entstehen innere Spannungen im Gewebe. Auf mikroskopischer Ebene sind diese Spannungen primär bedingt durch die Steifheit der "tie-Moleküle" im amorphen Bereich. Diese Steifheit ist bedingt durch energetische Unterschiede in den unterschiedlichen cis-trans-gauche-Konformation der Ketten und den Nebenvalenzkräfte zwischen den Ketten, d.h. sowohl durch intra- als auch intermolekulare Wechselwirkungen.

Das erfindungsgemäße Verfahren führt nun dem gefalteten Luftsack in einem ersten Schritt hinreichend viel Energie zu, so dass sich die unter Spannung stehenden "tie-Moleküle" im amorphen Bereich "freier bewegen" und die inneren Spannungen dadurch abgebaut werden. In einem zweiten Schritt wird nun wieder Energie aus dem System entzogen, so dass die Ketten in der neuen Konformation "einfrieren". Das gesamte Luftsackpaket bleibt dadurch auch nach Wegnahme der äußeren Zwangsbedingung selbstständig in der vorgegebenen Form.

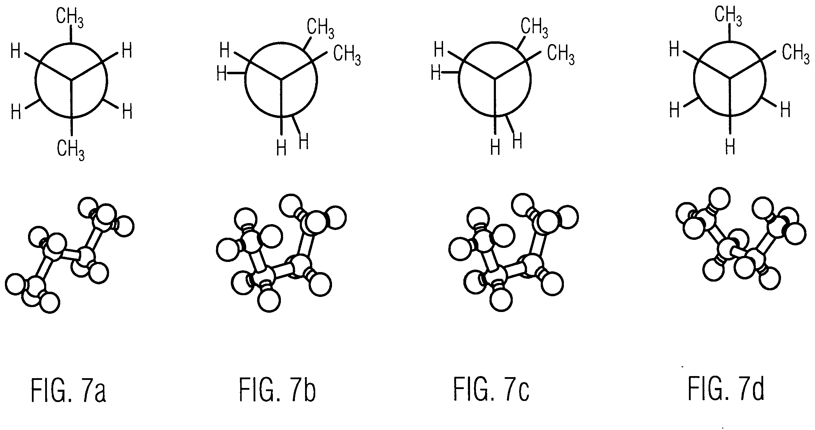

Die Figuren 7a bis 7d zeigen die vier Phasen der Gewebemoleküle eines nach dem erfindungsgemäßen Verfahren in dauerhaft stabile Form gebrachten Gassackpaketes, wobei in Fig. 7a das Gewebe vor der Bearbeitung gezeigt ist, in Figur 7b das Gewebe gefaltet und in Form gepresst dargestellt ist, in Figur 7c das Gewebe nach einer Erwärmung auf T=150°C gezeigt ist, und in Figur 7d das Gewebe zwei Stunden später nach der Abkühlung auf T=40°C dargestellt ist.

Wie in Fig. 7a dargestellt, befindet sich das Gewebe in seinem Ausgangszustand in seiner energetisch günstigsten Anordnung, da Zwangsbedingung fehlen; der C-C Bindungswinkel ist ein Tetraederwinkel.

Wie in Fig. 7b dargestellt, bewirkt das Falten bzw. Formen des Gewebes eine Biegung der Moleküle und somit eine Abweichung vom Tetraederwinkel; es entstehen innere Spannungen im Molekül, so dass ohne den äußeren Zwang der Formpresse das Gewebe zurückfedern würde (Rebound Effect).

Wie in Fig. 7c dargestellt, erfolgt eine Drehung der Moleküle um 120° bzw. -120° um Längsachse aufgrund der thermischen Aktivierung. Es erfolgt also über die Zeit ein Abbau der inneren Spannungen mit der weiteren Folge, dass sich die Bindungswinkel sich wieder Tetraederwinkeln angleichen.

Wie schließlich in Fig. 7d dargestellt, ist die neue Konformation bei vorgegebener Zwangsbedingung (Gassackpaket gefaltet im Container) die energetisch günstigste. Die rasche Abkühlung deaktiviert die fortgesetzte Drehung der Moleküle, so dass das Gassackpaket Paket thermisch fixiert ist und sich auch nach einer Entfernung des Zwangs dauerhaft nicht mehr entfaltet.

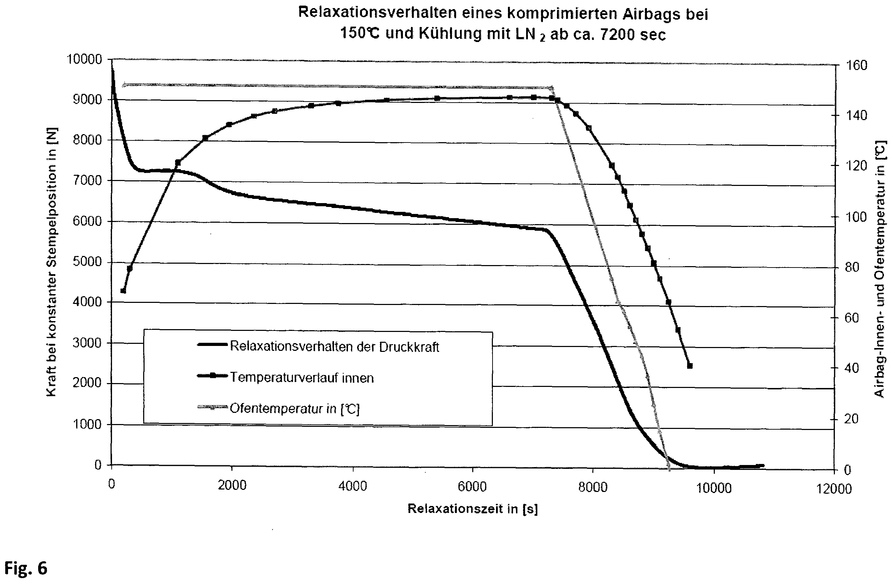

Hierzu wurden Versuche durchgeführt, die bestätigen, dass es erfindungsgemäß möglich ist, das Gassackpaket selbstständig dauerhaft formstabil zu erzeugen: Hierbei wurde ein in Form gebrachtes Gassackpaket im kalten Zustand in einen auf 150°C aufgewärmten Ofen eingebracht. Der zur Formgebung verwendete Pressstempel wurde innerhalb ca. 60s-90s mit 10000N belastet. Die dabei erreichte Stempelposition wurde dann über den gesamten Versuch konstant gehalten. In diesem Zustand wurde für 2h = 7200 s die wirkende Kraft auf den Stempel registriert. Zur besseren Überschaubarkeit des Temperaturverlaufs wurde die Temperatur im inneren des Airbags mit einem Thermoelement gemessen. Im Anschluss der 2h bei 150°C wurde mittels flüssigem Stickstoff (In₂) der Ofen bzw. die Vorrichtung mit Airbag abgekühlt. Die Ergebnisse sind in Figur 6 zusammengestellt, die den Verlauf der Druckkraft und der Temperatur während des Versuchs wiedergibt.

Es zeigt sich, dass In den ersten Minuten der größte Kraftabbau stattfindet. Mit dem Erreichen der Glasübergangstemperatur(en) ist eine schnelle Relaxation der Druckkraft bis zum Ausfüllen vorhandener "Hohlräume" gegeben. Durch Abkühlen verringert sich die wirkende Druckkraft. Beim Erreichen der Innentemperatur von ca. 50°C - 60°C ist die Druckkraft kleiner als 100N.

Das Abkühlen des gepreßten Gassackpaketes von der Erwärmungstemeratur auf die Verfahrensendtemperatur erfolgt erfindungsgemäß in kurzer Zeit von weniger als 40 Minuten, insbesondere von weniger als 35 Minuten, insbesondere von weniger als 20 Minuten, insbesondere von weniger als 15 Minuten, vorzugsweise innerhalb von 10 Minuten.

Es ist vorgesehen, dass die Verfahrensendtemperatur, also die Temperatur am Ende des gerichteten raschen Abkühlens über der Raumtemperatur liegt und/oder mehr als 25°C, vorzugsweise mehr als 30°C, weiter vorzugsweise mehr als 35°C insbesondere ca. 40°C beträgt. Ein nachfolgendes weiteres Abkühlen ist denkbar, jedoch ohne Einfluß auf das erfindungsgemäße Verfahren und die Dauerhafte Formstabilität des Gassackpacketes.

### Bezugszeichenliste

- 1: Gassackpaket
- 2: Gassack
- 3: Außenfläche
- 4: Vertiefung
- 5: Formelement
- 6: Presselement
- 7: Sperrbalken
- 8: Öffnung
- 9: Schraube

## Patentansprüche

1. Verfahren zur Herstellung eines Gassackpakets (1) oder eines Insassenrückhaltesystems mit einem Gassackpaket (1), bei dem ein gefalteter Gassack (2) in ein Formelement (5) eingelegt und anschließend gepresst sowie erwärmt wird, wobei das Pressen des Gassacks (2) zumindest solange durchgeführt wird, bis das Gassackpaket (1) im Wesentlichen selbstständig dauerhaft formstabil ist,
**dadurch gekennzeichnet, dass** zur thermischen Fixierung des Gassackpakets (1) nach dem Schritt des Erwärmens ein Schritt des Abkühlens des Gassackes (2) auf eine Verfahrensendtemperatur in kurzer Zeit von weniger als 35 Minuten um mindestens 100°C vorgesehen ist.

2. Verfahren nach Anspruch 1, **dadurch gekennzeichnet, dass** der Gassack (2) auf eine Temperatur von wenigstens 125°C, vorzugweise wenigstens 140°, insbesondere etwa 150°C, erwärmt wird.

3. Verfahren nach Anspruch 1 oder 2, **dadurch gekennzeichnet, dass** das Erwärmen des Gassacks (2) über einen Zeitraum von wenigstens einer Stunde, vorzugsweise etwa 2 Stunden, durchgeführt wird.

4. Verfahren nach einem der vorhergehenden Ansprüche, **dadurch gekennzeichnet, dass** das Pressen bei einem Druck von wenigstens 50 N/cm², vorzugsweise bei einem Druck von wenigstens 80 N/cm², weiter vorzugsweise bei einem Druck von wenigstens 110 N/cm², und insbesondere bei einem Druck von größer gleich 130 N/cm² erfolgt.

5. Verfahren nach einem der vorhergehenden Ansprüche, **dadurch gekennzeichnet, dass** der Schritt des Abkühlens des Gassackes (2) auf eine Verfahrensendtemperatur um mindestens 110°C, vorzugsweise um mindestens 120°C, insbesondere um mindestens 125°C vorgesehen ist.

6. Verfahren nach Anspruch 5, **dadurch gekennzeichnet, dass** die Verfahrensendtemperatur über der Raumtemperatur liegt und/oder mehr als 25°C, vorzugsweise mehr als 30°C, weiter vorzugsweise mehr als 35°C insbesondere ca. 40°C beträgt.

7. Verfahren nach einem der vorhergehenden Ansprüche, **dadurch gekennzeichnet, dass** der Schritt des Abkühlens des Gassackes (2) auf die Verfahrensendtemperatur in kurzer Zeit von weniger als 20 Minuten, vorzugsweise innerhalb von 15 Minuten erfolgt.

8. Verfahren nach einem der vorhergehenden Ansprüche, **dadurch gekennzeichnet, dass** das Pressen des Gassackes (2) auch während des Schrittes des Abkühlens des Gassackes (2) auf die Verfahrensendtemperatur erfolgt.

9. Verfahren nach einem der vorhergehenden Ansprüche, **dadurch gekennzeichnet, dass** das Formelement (5) eine Innenkontur aufweist, die der Innenkontur eines Aufnahmeraums für das Gassackpaket (1) im Insassenrückhaltesystem entspricht.

10. Verfahren nach einem der vorhergehenden Ansprüche, **dadurch gekennzeichnet, dass** das Pressen des Gassacks (2) mit einem Presselement (6) durchgeführt wird, das auf einer auf den Gassack (2) auflegbaren Kontaktfläche eine Erhebung aufweist.

## Claims

1. A method of manufacturing an airbag package (1) or an occupant restraint system comprising an airbag package (1) in which a folded airbag (2) is inserted in a molding element (5) and subsequently compressed and heated, wherein compressing the airbag (2) is carried out at least until the airbag package (1) is substantially independently continuously dimensionally stable,
**characterized in that**, for thermally fixing the airbag package (1), after the step of heating a step of cooling the airbag (2) to an end of process temperature within a short period of less than 35 minutes by at least 100°C is provided.

2. The method according to claim 1, **characterized in that** the airbag (2) is heated to a temperature of at least 125°C, preferably at least 140°C, especially about 150°C.

3. The method according to claim 1 or 2, **characterized in that** the heating of the airbag (2) is carried out over a period of time of at least one hour, preferably approx. 2 hours.

4. The method according to any one of the preceding claims, **characterized in that** compressing is carried out at a pressure of at least 50 N/cm², preferably at a pressure of at least 80 N/cm², further preferably at a pressure of at least 110 N/cm² and especially at a pressure of greater than or equal to 130 N/cm².

5. The method according to any one of the preceding claims, **characterized in that** the step of cooling the airbag (2) to an end of process temperature by at least 110°C, preferably by at least 120°C, especially by at least 125°C is provided.

6. The method according to claim 5, **characterized in that** the end of process temperature is above the room temperature and/or amounts to more than 25°C, preferably more than 30°C, further preferably more than 35°C, especially about 40°C.

7. The method according to any one of the preceding claims, **characterized in that** the step of cooling the airbag (2) to the end of process temperature takes place within a short period of less than 20 minutes, preferably within 15 minutes.

8. The method according to any one of the preceding claims, **characterized in that** compressing the airbag (2) is also carried out during the step of cooling the airbag (2) to the end of process temperature.

9. The method according to any one of the preceding claims, **characterized in that** the molding element (5) exhibits an inner contour corresponding to the inner contour of a receiving space for the airbag package (1) in the occupant restraint system.

10. The method according to any one of the preceding claims, **characterized in that** compressing the airbag (2) is carried out by a pressing element (6) including an elevation on a contact surface adapted to be placed onto the airbag (2).

## Revendications

1. Procédé de fabrication d'un paquet coussin gonflable (1) ou d'un système de retenue d'occupant avec un paquet coussin gonflable (1), dans lequel un coussin gonflable plié (2) est inséré dans un élément profilé (5) puis pressé ainsi que chauffé, pour lequel le pressage du coussin gonflable (2) est effectué au moins jusqu'à ce que
Le paquet coussin gonflable (1) est principalement stable seul en forme et de manière permanente, **caractérisé en ce que**, pour la fixation thermique du paquet coussin gonflable (1) après l'étape de chauffage est prévue une étape de refroidissement du coussin gonflable (2) à une température de fin de procédé en un temps court de moins de 35 minutes à au moins 100 °C.

2. Procédé selon la revendication 1, **caractérisé en ce que** le coussin gonflable (2) est chauffé à une température d'au moins 125°C, de préférence d'au moins 140 °C, en particulier d'environ 150 °C.

3. Procédé selon la revendication 1 ou 2, **caractérisé en ce que** le chauffage du coussin gonflable (2) est réalisé sur une durée d'au moins une heure, de préférence d'environ 2 heures.

4. Procédé selon l'une quelconque des revendications précédentes, **caractérisé en ce que** le pressage se fait à une pression d'au moins 50 N/cm², de préférence à une pression d'au moins 80 N/cm², plus préférentiellement à une pression d'au moins 110 N/cm², et en particulier à une pression supérieure ou égale à 130 N/cm².

5. Procédé selon l'une quelconque des revendications précédentes, **caractérisé en ce que** l'étape de refroidissement du coussin gonflable (2) est prévue à une température de fin de procédé d'au moins 110°C, de préférence d'au moins 120°C, en particulier d'au moins 125°C.

6. Procédé selon la revendication 5, **caractérisé en ce que** la température de fin de procédé est supérieure à la température ambiante et / ou supérieure à 25°C, de préférence supérieure à 30°C, encore préférentiellement supérieure à 35°C, en particulier est d'environ 40°C.

7. Procédé selon l'une quelconque des revendications précédentes, **caractérisé en ce que** l'étape de refroidissement du coussin gonflable (2) à la température de fin de procédé se déroule en un temps court inférieur à 20 minutes, de préférence en moins de 15 minutes.

8. Procédé selon l'une des revendications précédentes, **caractérisé en ce que** le pressage du coussin gonflable (2) a également lieu pendant l'étape de refroidissement du coussin gonflable (2) à la température de fin de procédé.

9. Procédé selon l'une quelconque des revendications précédentes, **caractérisé en ce que** l'élément profilé (5) présente un contour intérieur qui correspond au contour intérieur d'un espace de réception du paquet coussin gonflable (1) dans le système de retenue des occupants.

10. Procédé selon l'une quelconque des revendications précédentes, **caractérisé en ce que** le pressage du coussin gonflable (2) est réalisé avec un élément de pression (6) qui présente une élévation sur une surface de contact pouvant être placée sur le coussin gonflable (2).
